# EUROPÄISCHE PATENTSCHRIFT

(11) **EP 2 823 543 B1**
(45) Veröffentlichungstag und Bekanntmachung des Hinweises auf die Patenterteilung: **05.10.2016**
(21) Anmeldenummer: 13710818.9
(22) Anmeldetag: 11.03.2013
(51) Int. Cl.: H02H 7/04

(54) **VERFAHREN ZUR VERWENDUNG EINER ELEKTRISCHEN EINHEIT**
METHOD FOR USING AN ELECTRICAL UNIT
PROCÉDÉ D'UTILISATION D'UN GROUPE ÉLECTRIQUE

(30) Priorität: 09.03.2012 EP 12158786
(43) Veröffentlichungstag der Anmeldung: 14.01.2015
(73) Patentinhaber: ABB Schweiz AG, 5400 Baden (CH)
(72) Erfinder: HILLBERG, Claes, CH-4313 Moehlin (CH); TRAXLER-SAMEK, Georg, CH-5705 Hallwill (CH); STEIMER, Peter, CH-5420 Ehrendingen (CH)
(74) Vertreter: ABB Patent Attorneys
(86) Internationale Anmeldenummer: PCT/EP2013/054870
(87) Internationale Veröffentlichungsnummer: WO 2013/132103

(56) Entgegenhaltungen:
- EP-A2- 0 303 171

## Beschreibung

### TECHNISCHES GEBIET

Die Erfindung betrifft ein Kraftwerk, insbesondere ein Verfahren zur Verwendung einer elektrischen Einheit hierfür umfassend eine elektrische Maschine, einem Frequenzumrichter und einem Blocktransformator, wobei die Maschine über den Umrichter und den Blocktransformator mit einem Stromnetz verbindbar ist.

### STAND DER TECHNIK

Moderne Kraftwerkstechnologie erlaubt es ein Kraftwerk effizienter zu gestalten. Bei manchen Kraftwerken, wie beispielsweise Windkraftwerken und Pumpspeicherkraftwerken, ist vorgesehen, dass eine elektrische Maschine direkt mit einem Umrichter verbunden ist.

Moderne Pumpspeicherkraftwerke oder Pumpspeicher weisen beispielsweise drehzahlvariable Antriebe auf. Durch eine Entkoppelung der Drehzahl der Maschinen von einer Netzfrequenz können Pump- und Turbinendrehgeschwindigkeiten so eingestellt werden, dass diese nahe am optimalen Wirkungsgrad betrieben werden. Zudem erlaubt es die Variation der Drehzahl im Pumpbetrieb, die Leistungsaufnahme frei einzustellen. Insbesondere können Systeme mit variabler Drehzahl schnell aus dem Stillstand mit dem Netz verbunden oder synchronisiert werden.

Pumpspeicher gemäss dem Stand der Technik weisen doppelt gespeiste Asynchronmaschinen und leistungselektronische Umrichter auf, womit eine Drehzahlregelung einer Pumpe und einer Turbine möglich ist. Damit wird zum Einen eine Pumpleistung geregelt und zum Anderen kann bei Bedarf der Wirkungsgrad der Anlage erhöht werden.

In einer Ausführungsform zur Drehzahlregelung der Pumpe oder der Turbine wird eine synchron Maschine verwendet deren Stator mittels eines Drehstroms mit einstellbarer Frequenz gespeist wird. Die Frequenzumformung wird dabei mit Hilfe einer Kombination eines Gleichrichters und eines Wechselrichters erzeugt, welche über einen Spannungs- oder Stromzwischenkreis miteinander verbunden sind.

Eine solche Ausführungsform ist ein Beispiel bei dem eine elektrische Maschine direkt mit einem Umrichter wie einem Frequenzumrichter verbindbar ist. Prinzipiell ist es auch denkbar andere Kraftwerke derart zu gestalten, dass die elektrische Maschine direkt mit einem Umrichter verbindbar ist.

Bei den grossen Leistungen in einem Kraftwerk treten sehr hohe Generatorströme auf, welche sich nicht zwischen dem Kraftwerk und den Verbrauchern übertragen lassen, da Verluste entlang einer Leitung durch den elektrischen Widerstand quadratisch mit dem Strom zunehmen. Daher ist häufig ein Blocktransformator oder auch Maschinentransformator genannt vorgesehen, welcher eine Generatorspannung auf beispielsweise eine in einem Hochspannungsnetz übliche deutlich höhere Spannung setzt, wobei der Strom entsprechend kleiner wird.

Zum Schutz des Blocktransformators in einem Kraftwerk ist weiterhin häufig ein Generatorschalter, Generatorleistungsschalter oder auch Generator Circuit Breaker genannt vorgesehen. Dieser trennt im Notfall beispielsweise bei einer Betriebsstörung des Blocktransformators die generatorisch arbeitende Maschine vom Blocktransformator und schützt den Blocktransformator vor hohen Kurzschlussströmen, welche im Falle einer Fehlfunktion von der Maschinenseite auf den Blocktransformator einwirken. Wird dieser lediglich vom Netz, nicht aber von der Maschine getrennt, so speist die Maschine weiterhin den defekten Blocktransformator, was gegebenenfalls zur Explosion des Blocktransformators führen kann. Ein solches System für ein Pumpspeicherkraftwerk mit einer motorisch-generatorischen rotierenden elektrischen Maschine in der Form einer doppelt gespeisten Asynchronmaschine, mit einem Blocktransformator und einem Generatorschalter ist beispielsweise in EP 0303171 A2 bekannt.

Dabei ist ein Generatorschalter aufwendig und kostenintensiv in der Herstellung und Wartung, da dieser unter extremen Bedingungen Schalten muss um im Notfall die Maschine vom Blocktransformator zu trennen.

Ein Verfahren gemäß dem Oberbegriff des Anspruchs 1 ist aus EP0303171 bekannt.

Davon ausgehend liegt der vorliegenden Erfindung die Aufgabenstellung zugrunde, ein Kraftwerk zu vereinfachen und effizienter zu gestalten.

### BESCHREIBUNG DER ERFINDUNG

Diese Aufgabe wird durch ein Verfahren zur Anwendung einer elektrischen Einheit für ein Kraftwerk gemäss Anspruch 1 gelöst.

Die Erfindung sieht dabei ein Verfahren zur Verwendung einer elektrischen Einheit für ein Kraftwerk beispielsweise ein Pumpspeicherkraftwerk, ein Windkraftwerk oder ein Kohlekraftwerk vor. Die elektrische Einheit umfasst eine elektrische Maschine beispielsweise eine drehzahlvariable oder drehzahlkonstante Maschine, einen Frequenzumrichter und einen Blocktransformator oder Maschinentransformator, wobei die Maschine über den Frequenzumrichter und den Transformator mit einem Stromnetz verbindbar ist. Das Verfahren sieht vor, dass bei einer Betriebsstörung wie einer Fehlfunktion des Blocktransformators oder in einem Notfall der Frequenzumrichter durch Öffnen von aktiven Schaltelementen wie beispielsweise von Transistoren oder Thyristoren den Blocktransformator von der Maschine trennt.

Durch das Verwenden des Frequenzumrichters als Trenner kann ein Generatorschalter eingespart werden. Dadurch werden Kosten für Herstellung und Wartung der elektrischen Einheit reduziert.

### KURZBESCHREIBUNG DER ZEICHNUNGEN

Weitere Merkmale, Einzelheiten und Vorteile der Erfindung ergeben sich aus dem Wortlaut der Ansprüche sowie aus der Beschreibung von Ausführungsbeispielen anhand der Figur.

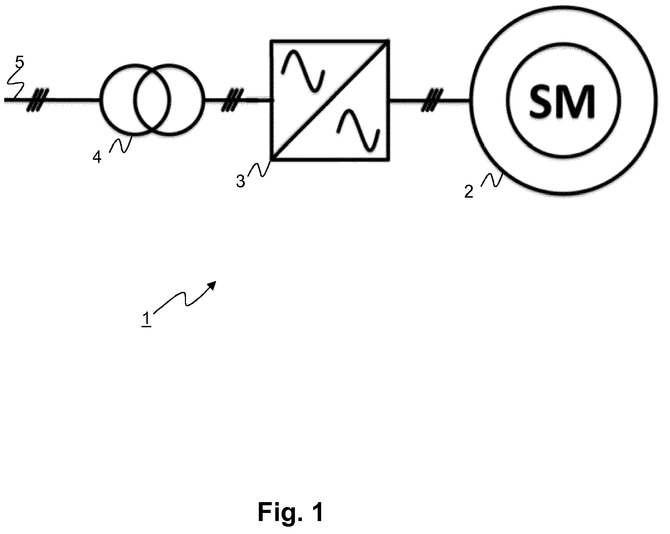

Die Erfindung wird in weiteren Einzelheiten anhand des nachfolgenden Textes mit Bezug auf bevorzugte Ausführungsbeispiele anhand der Figur näher erläutert. Es zeigt
- Fig.1: eine schematische Darstellung einer elektrischen Einheit mit einer elektrischen Maschine und mit einem Umrichter verbunden über einen Blocktransformator mit einem Stromnetz.

Die Bezugszeichen und deren Bedeutung sind zusammengefasst in der Bezugszeichenliste. Im allgemeinen bezeichnen dieselben Bezugszeichen dieselben Teile.

### DETAILIERTE BESCHREIBUNG BEISPIELHAFTER AUSFÜHRUNGSFORMEN

Fig.1 zeigt in einer schematischen Darstellung eine elektrische Einheit 1 umfassend eine elektrische Maschine 2 und einen Umrichter 3 über einen Blocktransformator 4 verbunden mit einem Stromnetz 5. Die Maschine 2 wird in Abhängigkeit einer Betriebsart der Maschine 2 als Motor oder Generator verwendet.

Eine Frequenzumformung wird mittels einer Kombination eines Gleichrichters und eines Wechselrichters erzeugt. Der Gleichrichter und der Wechselrichter sind über einen konzentrierten oder verteilten Spannungszwischenkreis oder Stromzwischenkreis miteinander verbunden. Der Zwischenkreis weist dabei weiterhin Einheiten zur Energiespeicherung auf beispielsweise Kondensatoren bei einem Spannungszwischenkreis und Induktivitäten bei einem Stromzwischenkreis.

Bei geeigneter Konstruktion der netzseitigen Gleichrichter oder Wechselrichter oder auch ARU und maschinenseitigen Gleichrichter oder Wechselrichter oder auch INU können auftretende Störfälle im Blocktransformator 4, welche zu hohen Kurzschlusströmen führen würden sicher beherrscht werden, da die Maschine 2 durch den Umrichter 3 vom Blocktransformator 4 entkoppelt wird.

Der Betrieb der Maschine mit einer frei wählbaren Drehzahl weist in verschiedenen Anwendungen erhebliche Vorteile auf. Im Beispiel von Pumpspeicherkraftwerken können durch eine Entkoppelung der Drehzahl der Maschinen von einer Netzfrequenz Pump- und Turbinendrehgeschwindigkeiten so eingestellt werden, dass diese nahe am optimalen Wirkungsgrad betrieben werden. Zudem erlaubt es die Variation der Drehzahl im Pumpbetrieb, die Leistungsaufnahme frei einzustellen. Durch die Verwendung der synchron Maschine 2 sind insbesondere auch hohe Drehzahlen beispielsweise für hohe Gefälle realisierbar. Darüber hinaus reicht der betrieblich zugängliche Drehzahlbereich kontinuierlich von Null bis zur maximalen Drehzahl und ist nur beschränkt durch die betrieblichen Grenzen der Pumpe und der Turbine. Die Pumpe und die Turbine können prinzipiell in einer Einheit beispielsweise einer Pumpenturbine vereint werden. Insbesondere besteht die Möglichkeit einer Nachrüstung von älteren Anlagen auf variablen Frequenzbetrieb, ohne Austausch des bestehenden Generators. Ein weiterer Vorteil ist eine sehr rasche Netzkoppelung und die Möglichkeit positive und negative Blindleistung im Umrichter 3 zu erzeugen, damit kann der Generator ausschließlich mit Wirkleistung betrieben werden, wodurch dieser eine kompaktere Bauart aufweist. Weiterhin kann durch die Verwendung des Umrichters 3 schnell beispielsweise vom Pump- in Turbinenbetrieb umgeschaltet werden.

Insbesondere kann durch die erfindungsgemässe Ausführungsform etablierte, zuverlässige und wartungsarme synchron Generatortechnologie verwendet werden.

### BEZUGSZEICHENLISTE

- 1: Elektrische Einheit
- 2: Maschine
- 3: Umrichter
- 4: Blocktransformator
- 5: Stromnetz

## Patentansprüche

1. Verfahren zur Verwendung einer elektrischen Einheit (1) für ein Kraftwerk,
wobei die elektrische Einheit (1) umfasst
eine elektrische Maschine (2),
welche motorisch und generatorisch verwendbar ist,
einen Umrichter (3), welcher aktive Schaltelemente aufweist, und
einen Blocktransformator (4),
wobei die Maschine (2) über den Umrichter (3) und den Blocktransformator (4) mit einem Stromnetz (5) verbindbar ist, **dadurch gekennzeichnet, dass** das Verfahren den folgenden Schritt umfasst:
a. Trennen der Verbindung zwischen der Maschine (2) und dem Blocktransformator (4) bei einer Betriebsstörung der Einheit (1) im generatorischen Betrieb der Maschine (2) durch Öffnen der aktiven Schaltelemente des Umrichters (3).

## Claims

1. Method for using an electric unit (1) for a power plant,
wherein the electric unit (1) comprises:
an electric machine (2),
which is useable as a motor and a generator,
a converter (3), which has active switching elements, and
a generator transformer (4),
wherein the machine (2) is connectable to an electric grid (5) via the converter (3) and the generator transformer (4),
**characterized in that** the method comprises the following step:
a. disconnecting the connection between the machine (2) and the generator transformer (4) in the event of faulty operation of the unit (1) during generator operation of the machine (2) by opening the active switching elements of the converter (3).

## Revendications

1. Procédé pour l'utilisation d'une unité électrique (1) pour une centrale électrique, l'unité électrique (1) comprenant
une machine électrique (2),
qui peut être utilisée en tant que moteur et en tant que générateur,
un convertisseur (3) qui présente des éléments de commutation actifs, et
un transformateur bloc (4), la machine (2) pouvant être connectée par le biais du convertisseur (3) et du transformateur bloc (4) à un réseau électrique (5), **caractérisé en ce que** le procédé comprend l'étape suivante :
a. séparation de la connexion entre la machine (2) et le transformateur bloc (4) dans le cas d'une perturbation du fonctionnement de l'unité (1) en mode générateur de la machine (2) par ouverture des éléments de commutation actifs du convertisseur (3).
